# FASCICULE DE BREVET EUROPEEN

(11) **EP 0 602 282 B1**
(45) Date de publication et mention de la délivrance du brevet: **23.01.2002**
(21) Numéro de dépôt: 92203695.9
(22) Date de dépôt: 30.11.1992
(51) Int. Cl.: H04L 12/56

(54) **Dispositif de reséquencement pour un noeud d'un système de commutation de cellules**
Einrichtung zum Wiederherstellen der richtigen Zellenfolge in einem Knoten eines Zellenvermittlungssystem
Resequencing means for a cell switching system node

(43) Date de publication de la demande: 22.06.1994
(73) Titulaire: ALCATEL, 75008 Paris (FR)
(72) Inventeur: Therasse, Yves, B-1450 Chastre (BE); Guebels, Pierre-Paul François, B-2650 Edegem (BE)
(74) Mandataire: Narmon, Gisèle Marie Thérèse

(56) Documents cités:
- WO-A-91/02419
- WO-A-91/02420
- WO-A-91/08633

## Description

L'invention concerne un dispositif de reséquencement pour un noeud d'un système de commutation de cellules. Elle concerne plus particulièrement les systèmes de commutation dans lesquels les cellules ont une longueur variable, chaque cellule pouvant être constituée d'un nombre variable de sous-cellules ayant une longueur fixe.

Chaque fois que ces cellules transitent à travers un noeud d'un système de commutation elles subissent chacune un retard variable en fonction du chemin suivi dans le réseau de commutation que comporte ce noeud. Les sous-cellules d'une même cellule sont liées de telle sorte qu'elles suivent un même chemin et subissent un même retard. A la sortie du réseau de commutation, les sous-cellules d'une même cellule ont donc conservé leur ordre initial, par contre les cellules n'ont pas toujours conservé leur ordre initial à cause de la dispersion des retards. Un dispositif de reséquencement a pour fonction de remettre ces cellules dans leur ordre initial.

La publication de brevet européen n°0 438 415 (Alcatel NV) décrit un procédé de reséquencement consistant à retarder chaque cellule d'un retard déterminé de telle façon que le retard total imposé par le réseau de commutation et par le dispositif de reséquencement ait une valeur sensiblement constante pour toutes les cellules, cette valeur étant généralement choisie supérieure au retard maximal que peut créer le réseau de commutation. Si le retard total est choisi inférieur à la valeur maximale du retard que peut créer le réseau de commutation, la probabilité d'une pertubation de l'ordre initial n'est pas nulle, et est fonction de la valeur choisie pour le retard total. Ce procédé connu comporte deux variantes.

Une première variante consiste à : associer à chaque cellule entrant dans le réseau de commutation une étiquette temporelle qui indique à quel instant la cellule a pénétré dans le réseau de commutation; à extraire l'étiquette temporelle de chaque cellule sortant du réseau de commutation; à stocker chaque cellule sortant du réseau, jusqu'à ce que l'heure indiquée par le générateur d'étiquettes temporelles soit égale à l'heure indiquée dans l'étiquette temporelle de la cellule, plus le retard total choisi; et alors autoriser l'émission de la cellule sur une sortie du dispositif de reséquencement. L'émission est effectivement réalisé sitôt que la sortie à laquelle la cellule et destinée est disponible.

Selon cette variante, l'ordre initial des cellules est reconstitué sans avoir à mesurer ou à estimer le retard de transit de chaque cellule à travers le réseau de commutation. Par contre, l'heure fournie par le générateur d'étiquettes temporelles doit être disponible dans un dispositif situé à l'entrée du réseau pour attribuer des étiquettes temporelles, et doit être disponible simultanément dans un dispositif de reséquencement situé à la sortie du réseau, pour autoriser l'émission de chaque cellule à un instant convenable.

Selon une autre variante de ce procédé connu, il consiste à associer à chaque cellule sortant du réseau une étiquette dont la valeur est une estimation du retard subi par la cellule au cours de son transit à travers le réseau; et à faire subir à chaque cellule un retard supplémentaire de durée égale à la différence entre la valeur prédéterminée du retard total et la valeur estimée du retard de transit dans le réseau, cette dernière étant lue dans l'étiquette associée à chaque cellule. Cette variante présente l'avantage de ne pas nécessiter un dispositif associant des étiquettes temporelles aux cellules arrivant aux entrées du réseau de commutation.

Cette demande de brevet décrit aussi un dispositif de reséquencement mettant en oeuvre la première variante du procédé mentionné ci-dessus, pour des cellules constituées chacune d'un nombre variable de sous-cellules ayant chacune une longueur fixe. Chaque sortie d'un noeud est munie d'un exemplaire de ce dispositif. Ce dispositif comporte :
- un générateur de premières étiquettes temporelles, fournissant une valeur incrémentée d'une unité pour chaque intervalle de temps correspondant à une sous-cellule, avec une durée de cycle au moins égale au retard total prédéterminé pour retarder uniformément toutes les cellules;
- une mémoire tampon ayant une entrée couplée à une entrée du dispositif de reséquencement, et ayant une sortie couplée à une sortie du dispositif de reséquencement; chaque emplacement de cette mémoire ayant une capacité égale à une sous-cellule;
- un circuit de gestion de cette mémoire tampon, pour fournir des adresses d'emplacements libres dans cette mémoire tampon et pour y stocker respectivement les sous-cellules de chaque cellule reçue par le dispositif de reséquencement;
- un pointeur de lecture-écriture associé à la mémoire tampon;
- une mémoire d'adresses ayant des emplacements correspondant respectivement aux diverses valeurs possibles de l'étiquette temporelle; chaque emplacement de cette mémoire d'adresses stockant un pointeur de début de liste et un pointeur de fin de liste qui sont respectivement les adresses, dans la mémoire tampon, de la première et de la dernière sous-cellule d'une suite contenant toutes les cellules ayant une même étiquette temporelle;
- une mémoire de liens, ayant le même ensemble d'adresses que la mémoire tampon, pour mémoriser des liens entre les adresses de toutes les sous-cellules ayant une même étiquette temporelle, et pour mémoriser des liens entre les adresses de sous-cellules appartenant à des cellules devant être émises successivement;
- un pointeur d'écriture associé à cette mémoire d'adresses pour stocker dans chaque emplacement la première adresse et la dernière adresse d'une liste d'adresses d'emplacements de la mémoire tampon, contenant toutes les sous-cellules de toutes les cellules ayant la même étiquette temporelle;
- un pointeur de lecture associé à la mémoire d'adresses, ayant un fonctionnement cyclique, pour lire successivement les contenus des emplacements de cette mémoire d'adresses, afin de lire des sous-cellules dans la mémoire tampon à des adresses correspondant à des étiquettes temporelles croissant de manière régulière.

Lorsque le délai expire pour une suite de cellules ayant une étiquette temporelle donnée, c'est-à-dire lorsque l'heure indiquée par le générateur d'étiquettes est égale à la somme de l'étiquette temporelle donnée et du retard total prédéterminé, la première et la dernière adresse de stockage de cette suite sont lues dans l'emplacement de la mémoire d'adresses correspondant à cette étiquette temporelle. Puis la mémoire de liens fournit la suite complète d'adresses, et permet donc de lire dans la mémoire tampon toutes les sous-cellules de toutes les cellules ayant l'étiquette temporelle considérée. Ces cellules sont lues dans un ordre qui est celui défini par les liens dans la mémoire de liens, mais cet ordre n'a pas d'importance puisque toutes ces cellules ont la même étiquette temporelle et sont adressées à une même sortie. La mémoire de liens est utilisée en outre pour enchaîner dans une même file d'attente les différentes suites de sous-cellules de cellules ayant des étiquettes temporelles successives, ce qui assure leur émission en bon ordre. Cet enchaînement est réalisé en faisant correspondre par la mémoire de liens la fin de la suite d'adresses de sous-cellule d'une cellule avec le début de la suite d'adresses de sous-cellule de la cellule à émettre ensuite.

Ce dispositif a un premier inconvénient qui est de ne pouvoir remettre en ordre des cellules arrivant sur une même entrée et étant destinées à plusieurs sorties, en particulier lorsqu'une même cellule doit être diffusée sur plusieurs sorties. Cette impossibilité découle du principe de fonctionnement de ce dispositif connu, parce qu'il nécessite de stocker, dans la mémoire d'adresses, à chaque emplacement, une adresse de début de suite d'adresses et une adresse de fin de suite d'adresses de sous-cellules; et qu'il nécessite de lier par une mémoire de liens toutes les sous-cellules qui devront ultérieurement être émises sur une même sortie.

Ce dispositif connu a un second inconvénient qui est de ne pas permettre la diffusion d'une cellule vers plusieurs sorties.

Ce dispositif connu a en outre pour inconvénient de ne pas permettre de grandes longueurs de cellule. Chaque emplacement de la mémoire d'adresses correspond à une unité de temps du générateur qui délivre les étiquettes temporelles. Cette unité de temps est égale à la durée d'une sous-cellule. Le générateur d'étiquettes temporelle n'a pas une capacité infinie. Il délivre donc des valeurs étiquettes identiques périodiquement. Chaque emplacement de la mémoire d'adresses est lu avec une période constante, au plus égale à la période du générateur d'étiquettes temporelles. Au moment de la lecture d'un emplacement, il faut que la constitution de la liste soit terminée, pour qu'une adresse de fin de liste puisse être lue valablement dans l'emplacement considéré. La période du générateur d'étiquettes temporelles limite donc le nombre de sous-cellules correspondant à cette liste, et finalement limite le nombre de sous-cellules que peut comporter chaque cellule.

Par ailleurs, il n'est pas possible d'augmenter indéfiniment la période du générateur d'étiquettes temporelles car cela nécessite d'augmenter le nombre de bits adjoints à chaque cellule pour constituer une étiquette temporelle.

Un premier but de l'invention est de proposer un dispositif de reséquencement permettant la diffusion d'une cellule d'une entrée vers plusieurs sorties prédéterminées, du dispositif de reséquencement. Un second but de l'invention est de proposer un dispositif de reséquencement pouvant être adapté plus facilement pour qu'il accepte des cellules composées d'un grand nombre de sous-cellules.

L'objet de l'invention est un dispositif de reséquencement pour un noeud d'un système de commutation de cellules, chaque cellule étant constituée d'un nombre variable de sous-cellules ayant une longueur fixe, ce noeud comportant un réseau de commutation transmettant les cellules avec des premiers retards variables, toutes les sous-cellules d'une même cellule subissant un même premier retard; ce dispositif de reséquencement comportant des moyens pour stocker toutes les cellules ayant été transmises à travers le réseau de commutation, puis les émettre sur au moins une sortie du dispositif de reséquencement, après l'expiration de divers délais d'attente constituant des seconds retards tels que, pour chaque cellule, la somme du premier et du second retard est égale à une valeur prédéterminée sensiblement identique pour toutes les cellules; ces moyens comportant :
- une mémoire tampon pour stocker les sous-cellules de chaque cellule reçue par le dispositif de reséquencement;
- une mémoire d'adresses pour mémoriser l'adresse, de la mémoire tampon, contenant la la première sous-cellule de chaque cellule;
- des moyens pour retrouver l'adresse, de la mémoire d'adresses, contenant la première sous-cellule d'une cellule, lorsque le délai d'attente de cette dernière a expiré, et qu'une sortie qui doit émettre cette cellule est disponible;
caractérisé en ce que les moyens pour retrouver l'adresse de la mémoire tampon, contenant la première sous-cellule d'une cellule, comportent :
- une mémoire dite de cellules en attente, accessible par son contenu, pour mémoriser un identificateur dit de cellule en attente, lorsqu'une cellule est stockée dans la mémoire tampon; cet identificateur étant stocké à une adresse identique à celle où est stockée, dans la mémoire d'adresses, l'adresse de la première sous-cellule; et cet identificateur étant constitué : de l'identité d'un intervalle de temps au cours duquel expire le délai d'attente de cette cellule, et de l'identité d'au moins une sortie sur laquelle elle doit être émise;
- des mémoires dites de marqueurs, associées respectivement aux sorties du noeud, pour mémoriser un marqueur lorsqu'une cellule est stockée dans la mémoire tampon, chaque marqueur mémorisé identifiant un intervalle de temps au cours duquel expire le délai d'attente d'au moins une cellule destinée à la sortie associée à la mémoire de marqueurs considérée;
- des moyens associés respectivement aux mémoires de marqueurs pour lire et effacer le marqueur le plus ancien parmi les marqueurs correspondant à des délais d'attente ayant expiré, lorsque la sortie correspondante est disponible; et pour fournir un identificateur de cellule à émettre constitué de l'identité de l'intervalle de temps et de l'identité de la sortie correspondant à ce marqueur lu;
- des moyens pour appliquer cet identificateur de cellule à émettre à une entrée de comparaison de la mémoire de cellules en attente, cette mémoire fournissant alors les adresses de tous les identificateurs de cellule en attente correspondant à cet identificateur de cellule à émettre; et pour libérer les emplacements de cette mémoire correspondant aux cellules qui ne doivent plus être émises;
- des moyens pour appliquer successivement à une entrée d'adresse de la mémoire de premières sous-cellules, chaque adresse fournie par la mémoire de cellules en attente, et y lire une adresse de première sous-cellule.

Le dispositif ainsi caractérisé est compatible avec une diffusion parce qu'il est associé à l'ensemble des sorties d'un noeud et parce que la mémoire de cellules en attente stocke des identificateurs qui peuvent contenir chacun plusieurs identités de sortie destinataire.

D'autre part, il est plus facile à réaliser pour des cellules de grandes longueurs car l'identificateur d'une cellule en attente peut être mémorisé dans cette mémoire sans attendre que toutes les sous-cellules de cette cellule aient été effectivement reçues par le noeud. Les premières sous-cellules d'une cellule peuvent donc être émises sur une sortie avant même que les dernières sous-cellules aient été reçues.

Selon un mode de réalisation du dispositif selon l'invention, il est caractérisé en ce que les mémoires de marqueurs comportent, pour chaque sortie, une suite de registres; chaque registre étant susceptible de mémoriser un seul marqueur, et le nombre de registres étant égal au nombre des identités utilisables pour identifier des intervalles de temps;
en ce que les moyens pour inscrire un marqueur comportent des moyens pour valider en écriture le registre correspondant à l'intervalle de temps où expirera le délai d'attente d'une cellule, en fonction de l'identificateur de cette cellule;
et en ce que les moyens pour lire et effacer un marqueur comportent pour chaque sortie :
   - des moyens pour lire les marqueurs correspondant aux intervalles de temps les plus anciens;
   - des moyens reliés à tous les registres, pour fournir un identificateur de cellule à émettre constitué : de l'identité de l'intervalle de temps le plus ancien parmi ceux correspondant aux marqueurs lus; et de l'identité de ladite sortie;
   - des moyens pour effacer le marqueur correspondant à l'intervalle de temps le plus ancien, parmi les marqueurs lus, lorsque toutes les cellules correspondant à cet identificateur de cellule à émettre ont été retrouvées dans la mémoire de cellules en attente.

Un mode de réalisation, permettant la diffusion d'une cellule d'une entrée vers plusieurs sorties du dispositif de reséquencement, est caractérisé en ce que :
- pour chaque cellule devant être émise par plusieurs sorties, un identificateur de cellule en attente identifie chacune des sorties sur lesquelles elle doit être émise;
- chaque identificateur de cellule à émettre identifie une seule sortie disponible;
et en ce qu'il comporte en outre des moyens pour :
- retrouver dans la mémoire de cellules en attente, successivement chaque identificateur de cellule en attente, contenant l'identité de la sortie disponible identifiée par l'identificateur de cellule à émettre;
- lire dans cette mémoire chaque identificateur, de cellule en attente, ainsi retrouvé;
- émettre la cellule correspondante sur ladite sortie;
- réinscrire cet identificateur à la même adresse dans la mémoire de cellules en attente, après avoir supprimé dans cet identificateur l'identité de la sortie où la cellule a été émise, pour mettre à jour cet identificateur de cellule en attente.

L'invention sera mieux comprise et d'autres détails apparaîtront à l'aide de la description ci-dessous et des figures l'accompagnant :
- la figure 1 représente un schéma synoptique commun à un premier et un deuxième exemple de réalisation du dispositif selon l'invention, raccordé à un réseau de commutation, pour constituer un noeud d'un système de commutation de cellules;
- la figure 2 représente un schéma synoptique plus détaillé du premier exemple de réalisation, qui ne convient que pour des cellules destinées à une sortie unique;
- la figure 3 représente le schéma synoptique d'une partie du premier exemple de réalisation ;
- la figure 4 illustre le fonctionnement de cette partie du premier exemple de réalisation;
- la figure 5 représente un schéma synoptique d'une partie du deuxième exemple de réalisation, permettant une diffusion d'une entrée vers plusieurs sorties.

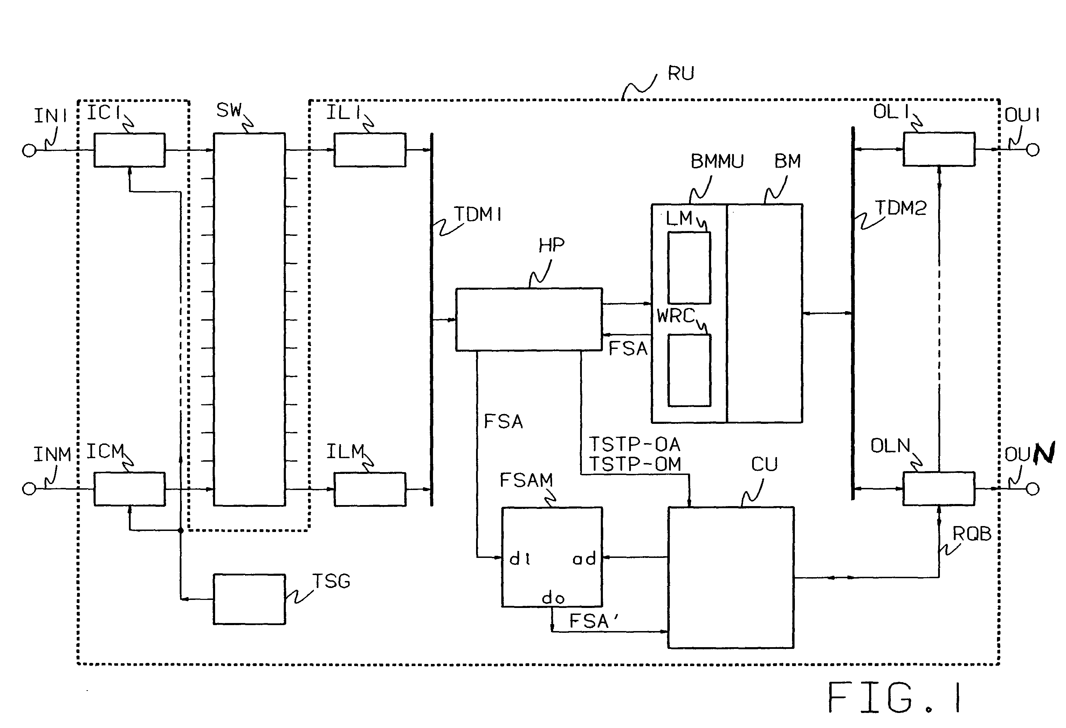

La figure 1 représente un noeud d'un réseau de télécommunications à mode de transfert asynchrone, comportant un réseau de commutation SW et un exemple de réalisation, RU, du dispositif de reséquencement selon l'invention. Ce noeud comporte M entrées IN1,...,INM, et N sorties OU1,...,OUN. Cet exemple de réalisation du dispositif de reséquencement RU comporte :
- M circuits étiquetteurs IC1,...,ICM, ayant chacun : une entrée reliée respectivement à une entrée IN1,...,INM du noeud, une sortie reliée respectivement à l'une des N entrées du réseau de commutation SW, et une entrée commune;
- M circuits d'entrée IL1,...,ILM ayant chacun : une entrée reliée respectivement à l'une des M sorties du réseau de commutation SW, et une sortie reliée à un bus TDM1 à multiplexage temporel;
- un circuit HP de traitement des en-têtes de cellule, ayant une première entrée reliée au bus TDM1;
- une unité de commande CU qui sera détaillée plus loin et qui comporte une première entrée reliée respectivement à une première sortie du circuit HP de traitement des en-têtes;
- un générateur d'étiquettes temporelles, TSG, ayant une sortie reliée à l'entrée commune des circuits étiquetteurs IC1,...,ICM, ; ce générateur étant constitué d'une horloge et d'un compteur, non représentés, pour fournir une valeur d'étiquette temporelle incrémentée d'une unité pour chaque intervalle de temps correspondant à une sous-cellule, de O à TSTPmax, modulo TSTPmax;
- une mémoire tampon BM associée à une unité de gestion de mémoire tampon BMMU, cet ensemble ayant : une entrée reliée à une deuxième sortie du circuit HP de traitement d'en-têtes, une sortie reliée à une deuxième entrée du circuit HP, et une entrée-sortie reliée à un bus TDM2 à multiplexage temporel;
- une mémoire FSAM appelée mémoire d'adresses, ayant : une entrée de données, di, reliée à une troisième sortie du circuit HP, une entrée d'adresse ad reliée à une sortie de l'unité CU, et une sortie do reliée à une deuxième entrée de l'unité CU;
- N circuits de sorties OL1,...,OLN ayant chacun : une entrée-sortie reliée au bus TDM2, une sortie reliée respectivement à l'une des sorties OU1,...,OUN du noeud, et une entrée-sortie reliée à un bus RQB, lui-même relié à une entrée-sortie de l'unité de commande CU.

Les entrées IN1,...,INM reçoivent des cellules de longueur fixe ou variable, constituées chacune de sous-cellules ayant toutes le même nombre de bits et la même durée, cette durée étant appelée période de sous-cellule. Le dispositif selon l'invention est particulièrement adapté pour traiter des cellules à longueur variable. Ces cellules sont commutées dans le réseau de commutation SW en routant toutes les sous-cellules d'une même cellule par un même chemin et en maintenant la continuité de la cellule, c'est-à-dire sans entrelacer des sous-cellules appartenant à des cellules différentes. Ceci permet d'attribuer une étiquette temporelle unique pour l'ensemble des sous-cellules constituant une cellule. Cette étiquette temporelle indique l'intervalle de temps pendant lequel la première sous-cellule de la cellule considérée est reçue à l'une des entrées IN1,...,INM.

Cette étiquette permet de reséquencer les cellules sortant du réseau de commutation SW : la première sous-cellule est autorisée à sortir du noeud lorsque son délai d'attente a expiré, c'est-à-dire au cours de l'intervalle de temps où le générateur TSG indique une heure égale à la somme de la valeur de l'étiquette temporelle qui fut attribuée à la cellule, et d'une valeur fixée. Mais il y a une condition supplémentaire pour que la cellule soit émise : la sortie à laquelle est destinée cette cellule, doit être disponible. Sinon, il faut que la cellule considérée attende encore jusqu'à ce que cette sortie soit disponible.

Chaque sous-cellule commence par deux bits appelés champ de contrôle de sous-cellule. Dans la première sous-cellule de chaque cellule, ces deux bits ont pour valeur 11 par exemple. Dans toutes les autres sous-cellules, sauf la dernière, ces deux bits ont pour valeur 00 par exemple. Dans la dernière sous-cellule, ces deux bits ont pour valeur 01 par exemple. La première sous-cellule comporte en outre un champ appelé en-tête de contrôle de cellule. Ce champ contient notamment l'identité de la sortie qui doit émettre cette cellule, ou de plusieurs sorties dans le cas d'une diffusion. Les autres bits des sous-cellules transmettent des données.

Les étiquetteurs IC1,...,ICM ont pour fonction d'insérer dans le champ de contrôle de cellule, de chaque cellule, une étiquette temporelle fournie par le générateur TSG à l'instant où la première sous-cellule de cette cellule est reçue par le noeud. Cette étiquette temporelle TSTP indique l'intervalle de temps au cours duquel expirera le délai d'attente de la cellule. Elle est déterminée en fonction du contenu du compteur de TSG à l'instant où cette cellule arrive, et en fonction du retard total prédéterminé que chaque cellule doit subir. Dans un mode de réalisation préférentiel, le modulo TSTPmax, du compteur est choisi égal à ce retard total prédéterminé, la valeur de l'étiquette temporelle TSTP est alors numériquement égale à la valeur fournie par le compteur, à cause du modulo TSTPmax.

Quand l'un des circuits d'entrée IL1,....,ILM reçoit une cellule, il demande à l'unité de gestion BMMU des adresses libres pour stocker respectivement les sous-cellules de cette cellule dans la mémoire tampon BM. Afin d'optimiser l'utilisation de la mémoire tampon BM, les sous-cellules d'une même cellule ne sont pas stockées à des adresses consécutives mais à des adresses aléatoires. L'unité de gestion BMMU comporte notamment un circuit WRC de commande d'écriture et de lecture, stockant les adresses libres de la mémoire tampon BM au fur à mesure qu'elles sont libérées par l'émission de cellules, et comporte une mémoire de liens SLM stockant toutes les adresses des emplacements, de la mémoire tampon BM, stockant respectivement toutes les sous-cellules d'une même cellule. Chaque emplacement de la mémoire tampon a une capacité égale à une sous-cellule.

La réalisation de la mémoire tampon BM et de l'unité de gestion BMMU est à la portée de l'Homme de l'Art car elle est décrite notamment dans la publication de brevet européen EP 0 441 787 (Alcatel NV). Préférentiellement, la mémoire tampon BM et la mémoire de liens SLM ont un même ensemble d'adresses pour faciliter la réalisation .

La demande émise par l'un des circuits d'entrée IL1,...,ILM est transmise par le bus TDM1, puis par le circuit de traitement d'en-têtes HP jusqu'à l'unité de gestion BMMU. Cette dernière attribue aux sous-cellules de la cellule considérée une suite d'emplacements libres de la mémoire tampon BM. Une suite d'adresses désignant ces emplacements libres est fournie par le circuit WRC. Des liens entre les adresses de cette suite sont constitués en mémorisant cette suite d'adresses dans la mémoire de liens SLM, à des adresses consécutives. L'unité de gestion BMMU fournit au circuit de traitement d'en-têtes, HP, une valeur FSA qui est la première adresse de cette suite d'adresses d'emplacements de la mémoire tampon BM. L'adresse FSA est retransmise sur la troisième sortie du circuit HP. Cette adresse FSA est inscrite dans la mémoire d'adresses FSAM dans un emplacement libre dont l'adresse est fournie par la sortie de l'unité CU.

Cette adresse FSA permettra ultérieurement de retrouver toutes les sous-cellules de cette cellule dans la mémoire tampon BM : En utilisant cette adresse FSA, il est possible de lire, dans la mémoire de liens SLM, l'adresse d'une deuxième sous-cellule dans la mémoire-tampon BM. Puis, avec l'adresse de cette deuxième sous-cellule, il est possible de lire dans la mémoire de liens SLM l'adresse d'une troisième sous-cellule dans la mémoire tampon BM. Il est donc possible d'obtenir succesivement les adresses de toutes les sous-cellules d'une même cellule à partir d'une adresse FSA unique. Ces adresses permettent ensuite de lire les sous-cellules elles-mêmes, dans la mémoire tampon BM.

Le circuit HP extrait, dans le champ de contrôle de cellule de la première sous-cellule de chaque cellule reçue, le champ contenant l'étiquette temporelle TSTP et un champ contenant l'identité de la sortie, ou des sorties, OU1,...,OUN, sur laquelle ou lesquelles la cellule doit être émise.

Le premier exemple de réalisation, décrit plus loin, ne convient que dans le cas où une cellule n'est destinée qu'à une seule sortie. L'identité de la sortie unique destinée à émettre une cellule est notée OA. Le circuit HP fournit simultanément à l'unité de commande CU : l'étiquette temporelle TSTP, l'identité de sortie OA, et la première adresse de sous-cellule FSA. Le second exemple de réalisation convient dans le cas où une cellule est destinée à plusieurs sorties, l'identité de ces sorties est notée OM. Pour un dispositif à N sorties cette identité OM peut être un mot de N bits où la valeur 1 est attribuée aux bits correspondant aux sorties auxquelles la cellule est destinée. La valeur 0 est attribuée aux autres bits.

Le traitement de ces données par l'unité CU sera décrit en détail plus loin, en distinguant deux variantes de réalisation correspondant respectivement au premier et au second exemple de réalisation du dispositif selon l'invention.

Pour émettre une cellule, le fonctionnement de l'unité de commande CU est déclenché par les circuits de sortie OL1,...,OLN lorsque l'un de ces circuits de sortie est disponible, c'est-à-dire lorsqu'il a fini d'émettre une cellule. Il envoie sur le bus RQB un message noté IDL contenant l'identité de la sortie qui est disponible, et adressé à l'unité de commande CU. L'unité de commande CU détermine alors quelle cellule va être émise sur cette sortie. L'unité CU envoie, au circuit de sortie demandeur, l'adresse FSA' d'un emplacement, de la mémoire tampon BM, contenant la première sous-cellule d'une cellule. Le circuit de sortie demande ensuite à la mémoire tampon BM et à son unité de gestion BMMU, de lui fournir la suite complète des sous-cellules de cette cellule. Puis il l'émet sur sa sortie.

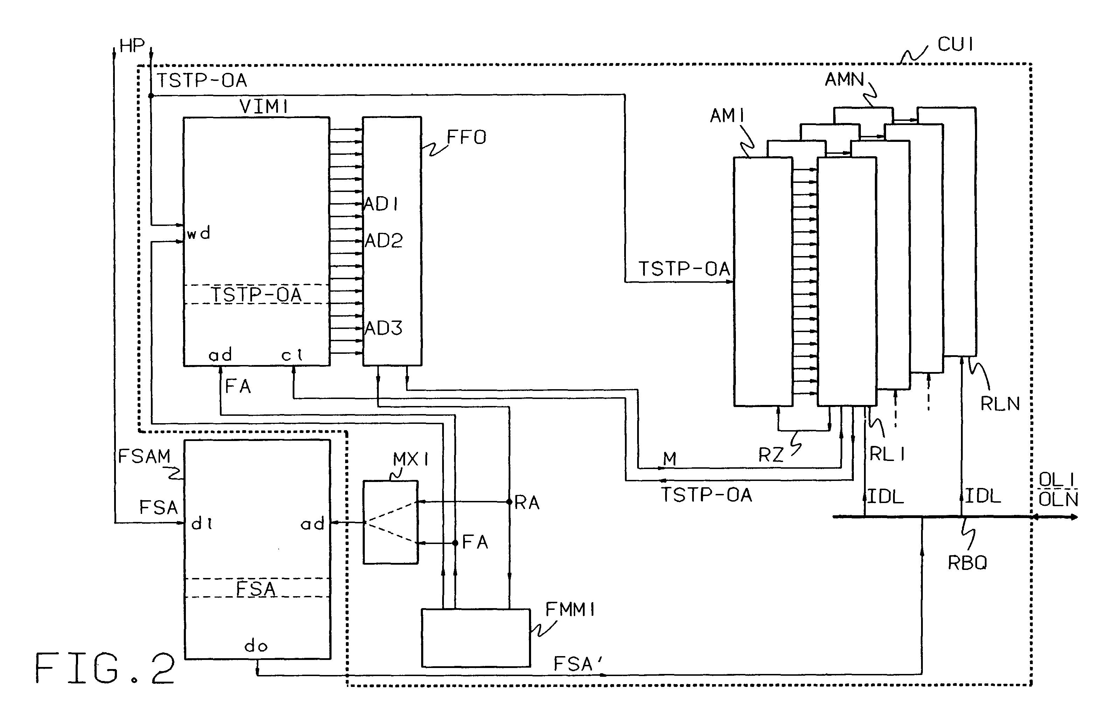

La figure 2 représente le schéma synoptique de l'unité de commande CU1 du premier exemple de réalisation du dispositif de reséquencement selon l'invention, qui ne peut acheminer une cellule que vers une seule sortie parmi les N sorties OU1, ..., OUN. L'unité CU1 comporte essentiellement :
- une mémoire de cellules en attente, VIM1, qui est du type accessible par le contenu, et qui a le même ensemble d'adresses que la mémoire FSAM, et la mémoire tampon BM;
- N mémoires de marqueurs, AM1, ...,AMN respectivement associés aux sorties OU1, ...,OUN;
- N circuits logiques de requête, RL1,...,RLN, respectivement associés aux N mémoires de marqueurs AM1,...,AMN;
- un circuit d'arbitrage FF0, associé à la mémoire VIM1;
- un multiplexeur MX1, ayant deux entrées, une sortie, et une entrée de commande;
- un circuit, FFM1, de gestion des emplacements libres de la mémoire d'identités de cellule VIM1 et de la mémoire d'adresses FSAM, qui réalise aussi l'effacement du contenu des emplacements à libérer.

La première entrée de l'unité de commande CU1 est reliée à une entrée de données d'écriture wd, de la mémoire VIM1. Elle est reliée en outre à une entrée de données commune à toutes les mémoires de marqueurs, AM1, ..., AMN. Pour chaque cellule reçue par le noeud, la première entrée fournit un identificateur de cellule, TSTP-OA, constitué de TSTP, qui indique l'intervalle de temps au cours duquel le délai d'attente expirera, et de l'identité OA de la sortie sur laquelle cette cellule doit être émise.

L'identificateur TSTP-OA est inscrit dans la mémoire VIM1 de cellules en attente, à un emplacement libre désigné par une adresse FA fournie par une première sortie du circuit FFM1 à son entrée d'adresse ad. Cette adresse est la même que celle fournie à la mémoire d'adresses FSAM pour stocker l'adresse FSA de la première sous-cellule. Cette particularité permettra de retrouver une adresse FSA lorsqu'une adresse d'un emplacement de la mémoire VIM1 sera déterminée en adressant cette mémoire VIM1 par le contenu de cet emplacement.

L'identificateur TSTP-OA est utilisé en outre comme adresse pour inscrire un marqueur dans l'une des mémoires AM1,..., AMN. L'identité OA permet de sélectionner l'une des mémoires AM1, ..., AMN, et l'identité TSTP permet de sélectionner un emplacement dans la mémoire ainsi sélectionnée. Chacune de ces mémoires de marqueurs comporte un nombre de registres égal à TSTPmax, chacun ayant une capacité d'un bit. Chaque marqueur est constitué d'un seul bit et identifie un intervalle de temps, par le rang du registre qu'il occupe dans l'une des mémoires de marqueurs.

Chaque marqueur indique qu'il y a au moins une cellule dont le délai d'attente expirera pendant l'intervalle de temps identifié par ce marqueur, et qui doit être émise sur la sortie correspondant à la mémoire de marqueurs considérée, dès que cette sortie sera disponible. Un marqueur unique est commun pour toutes les cellules dont les délais d'attente expireront au cours d'un même intervalle de temps, pour une sortie donnée.

La mémoire VIM1 possède une entrée, ci, dite de comparaison, qui est reliée à une sortie commune des circuits logiques de requête RL1, ...,RLN pour recevoir un identificateur TSTP'-OA', dit de cellule à émettre, identifiant au moins une cellule pour laquelle le délai d'attente a expiré. La mémoire VIM1 possède des sorties dont le nombre est égal au nombre d'emplacements qu'elle comporte. Ce nombre est choisi en fonction du nombre N de sorties du noeud, et du délai d'attente moyen des cellules dans la mémoire tampon BM.

La mémoire VIM1 étant une mémoire accessible par le contenu, son fonctionnement est le suivant. Il est possible de stocker une donnée, appliquée à l'entrée wd, à un emplacement désigné par une adresse appliquée à l'entrée ad. Puis, il est possible de déterminer quel emplacement contient une valeur donnée quelconque en appliquant une valeur identique à l'entrée de comparaison, ci. Chaque emplacement contenant cette valeur est indiqué par un bit sur une sortie respectivement. Le circuit d'arbitrage FF0 est un encodeur à priorité ayant des entrées reliées respectivement aux sorties de la mémoire VIM1 et ayant une première sortie fournissant un mot binaire indiquant successivement les adresses RA de la mémoire VIM1 où le contenu a la valeur recherchée, en considérant ces adresses selon un ordre de priorité décroissant, par exemple.

Le circuit FF0 possède en outre une deuxième sortie reliée à une deuxième entrée commune des circuits logiques de requête RL1, ..., RLN. La deuxième sortie fournit un signal logique M de valeur 0 lorsqu'il n'y a pas plus d'un résultat positif lors des comparaisons effectuées dans la mémoire VIM1, et une valeur 1 lorsqu'il y a au moins deux résultats positifs. Lorsqu'il y a plusieurs résultats positifs, le signal M garde la valeur 1 tant que les adresses RA n'ont pas toutes été fournies au circuit FMM1. Ce signal invite le circuit de requête ayant fourni l'identificateur TSTP-OA', à renouveller la fourniture de cet identificateur, chaque fois que la sortie considérée a fini d'émettre une cellule, de façon à émettre successivement toutes les cellules correspondant à la même valeur d'identificateur de cellule à émettre.

Le circuit d'arbitrage FF0 permet donc de traiter successivement plusieurs cellules dont les délais expirent simultanément, et qui doivent être émises sur une même sortie.

Chaque fois qu'une adresse RA de la mémoire VIM1 a été déterminée par le circuit FF0, le circuit FMM1 Libère cet emplacement en y inscrivant un identificateur de valeur nulle, qui est fourni par une seconde sortie du circuit FMM1 à l'entrée wd de la mémoire VIM1. Simultanément, la première sortie du circuit FMM1 fournit à l'entrée d'adresse ad de la mémoire VIM1 une adresse égale à l'adresse RA qui vient d'être déterminée par le circuit FF0. Lorsqu'un identificateur de cellule à émettre TSTP'-OA' permet de retrouver plusieurs identificateurs TSTP-OA dans la mémoire VIM1, chacune de leurs adresses est donc déterminée successivement par le circuit FF0, à la demande du circuit de requête, puis est libérée par le circuit FMM1.

La première sortie du circuit d'arbitrage FF0 est reliée en outre à une première entrée du multiplexeur MX1. Une seconde entrée du multiplexeur MX1 est reliée à la sortie du circuit de gestion FMM1. La sortie de ce multiplexeur MX1 constitue la sortie de l'unité CU1 est reliée à l'entrée d'adresse de lecture et d'écriture, ad, de la mémoire d'adresses FSAM.

Le multiplexeur MX1 possède une entrée de commande, non représentée, reliée à un séquenceur non représenté. Ce séquenceur fournit des signaux de commande et des signaux d'horloge à l'ensemble du dispositif de reséquencement. La séquence des opérations de traitement d'une cellule, réalisées sous sa commande, est décrite plus loin.

L'entrée-sortie de l'unité CU1 est reliée au bus RQB des circuits de sortie OU1, ..., OUN, par un circuit d'interface, non représenté, pour fournir à ces circuits de sortie l'adresse FSA' de la première sous-cellule d'une cellule à émettre.

Chaque mémoire de marqueurs AM1,...,AMN, possède une sortie pour chaque registre susceptible de mémoriser un marqueur. Le nombre de ces sorties est donc TSTPmax pour chaque mémoire. Chacun des circuits logiques de requête RL1,...,RLN possède des entrées reliées respectivement aux sorties de l'une des mémoires de marqueurs AM1,...,AMN. Chacun possède en outre une entrée reliée, par le bus RQB, respectivement à une sortie de l'un des circuits de sortie OL1, ..., OLN. Chaque mémoire de marqueurs, AM1, ..., AMN, possède 256 entrées de remise à zéro reliées respectivement à 256 sorties du circuit de requête correspondant, RL1, ..., RLN, par 256 liaisons référencées RZ.

Considérons successivement les deux grandes étapes du traitement d'une cellule par l'unité CU1: sa réception et sa mise en attente dans la mémoire de cellules en attente VIM1; puis sa recherche, sa récupération, et son émission lorsque la sortie destinataire est disponible et que le délai d'attente a expiré.

Lorsqu'une cellule a été stockée dans la mémoire tampon BM, le circuit de traitement des en-têtes HP, fournit simultanément à l'unité de commande CU1 l'adresse FSA de la première sous-cellule et l'identité TSTP-OA de la cellule. Cette adresse et cette identité sont inscrites respectivement dans la mémoire FSAM et dans la mémoire VIM1 à une même adresse FA fournie par le circuit FMM1, via le multiplexeur MX1 qui est commandé pour transmettre cette adresse FA vers l'entrée d'adresse ad de la mémoire FSAM. Simultanément l'identité TSTP-OA est utilisée comme adresse pour sélectionner un emplacement de marqueur dans l'une des mémoires AM1, ..., AMN, et y inscrire un marqueur. Cette cellule est alors en attente au moins jusqu'à ce que son délai d'attente ait expiré.

Lorsqu'une sortie OU1,...,OUN est disponible, le circuit de sortie correspondant OL1, ..., OLN envoie sur le bus RQB un message adressé à un circuit logique de requête RL1, ..., ou RLN qui correspond à la sortie disponible. Une interface, non représentée, reçoit ce message et fournit au circuit de requête concerné un signal logique IDL signifiant que la sortie correspondante est disponible. Ce circuit de requête détermine parmi les marqueurs correspndant à la sortie considérée, le marqueur dit le plus ancien qui correspond à la cellule (ou aux cellules) stockée depuis le plus longtemps. Il fournit un identificateur de cellule à émettre, TSTP'-OA', qui désigne au moins une cellule dont le délai d'attente a expiré et qui doit être émise sur cette sortie disponible. Cet identificateur est constitué : d'une champ TSTP' qui est une étiquette temporelle désignant un intervalle de temps pour lequel le délai d'attente a expiré; et d'une adresse de sortie, OA', qui désigne la sortie disponible.

La valeur de l'étiquette temporelle TSTP' contenue dans l'identificateur de cellule à émettre n'est pas liée de manière fixe à la valeur de l'étiquette temporelle courante TSTP qui est attribuée aux cellules en cours de réception. La valeur du champ TSTP' est calculée par le circuit logique de requête en fonction de la valeur, du champ TSTP', ayant été précédemment déterminée pour la sortie considérée. Elle est fonction en outre du fait que le circuit d'arbitrage FF0 a détecté précédemment soit une seule cellule, soit plusieurs cellules ayant un identificateur égal à l'identificateur TSTP'-OA' précédemment déterminé pour la sortie considérée.

Si la mémoire VIM1 contient un seul identificateur TSTP-OA égal à un identificateur TSTP'-OA' de cellules à émettre, le circuit FF0 détecte une seule adresse fournie par les sorties de la mémoire VIM1. Il fournit un signal M de valeur 0 aux circuits logiques de requête pour leur indiquer qu'il n'y a pas lieu de rechercher d'autres cellules correspondant à l'identificateur que ces circuits viennent de fournir. Le circuit de requête qui a fourni la valeur de TSTP'-OA' en conclut qu'il n'y a qu'une cellule à émettre. Il peut donc passer à une autre valeur d'identificateur TSTP'-OA' au cours de la période suivante. Il peut déterminer une nouvelle valeur du champ TSTP' pour constituer une nouvelle valeur de TSTP'-OA', en recherchant le prochain marqueur le plus ancien.

Si plusieurs cellules sont arrivées en même temps à l'entrée du dispositif de reséquencement RU et sont destinées à une même sortie. La mémoire VIM1 contient alors la même valeur d'identificateur TSTP-OA dans plusieurs emplacements. Elle fournit simultanément plusieurs adresses AD1, AD2, AD3 sur ses sorties. Le circuit d'arbitrage FF0 détecte qu'il y a une pluralité d'adresses sur ses entrées. Il fournit alors aux circuits de requête RL1 ...., RLN un signal logique M de valeur 1 indiquant qu'il y a plusieurs cellules correspondant à l'identificateur TSTP'-OA'. Le circuit logique de requête sait alors qu'il doit fournir plusieurs fois la même valeur d'identificateur TSTP'-OA' à l'entrée de comparaison de la mémoire VIM1. Chaque fois, le circuit d'arbitrage FF0 fournit une adresse RA différente, jusqu'à épuisement de toutes les cellules ayant un identificateur égal à TSTP'-OA'. Le signal M reprend alors la valeur 0. Le circuit de requête peut déterminer une nouvelle valeur du champ TSTP'.

L'adresse RA fournie par le circuit d'arbitrage FF0 est transmise par le multiplexeur MX1 à l'entrée ad d'adresse de lecture et d'écriture de la mémoire FSAM pour lire l'adresse FSA' de la première sous-cellule de la cellule à émettre. Cette adresse FSA' est transmise par une interface non représentée et par le bus RBQ à destination du circuit de sortie OL1, ..., OLN ayant émis le message de demande IDL. Ce circuit de sortie demande alors à l'unité de gestion BMMU de la mémoire tampon BM, par l'intermédiaire du bus TDM2, de lui transmettre la suite de toutes les sous-cellules constituant la cellule dont la première sous-cellule est à l'adresse FSA' dans la mémoire tampon BM. Lorsque ce circuit de sortie a reçu la dernière sous-cellule de cette cellule, sa sortie est de nouveau libre. Il envoie alors de nouveau un message IDL sur le bus RBQ, à destination du circuit logique de requête qui lui est associé.

L'adresse RA est fournie aussi au circuit de gestion d'adresses FMM1. Le contenu de cette adresse doit être effacé dans la mémoire VIM1 pour éviter qu'une fourniture renouvellée d'un même identificateur TSTP'-OA' provoque toujours la détermination d'une même adresse RA par le circuit d'arbitrage FF0. Le circuit FMM1 transmet l'adresse RA à l'entrée d'adresse, ad, de la mémoire VIM1, et un mot binaire de valeur nulle à l'entrée de données d'écriture, wd.

Le circuit FMM1 mémorise cette adresse disponible. Il puise parmi les adresses disponibles pour fournir une adresse FA aux mémoires VIM1 et FSAM lorsqu'une cellule est reçue par le dispositif de reséquencement.

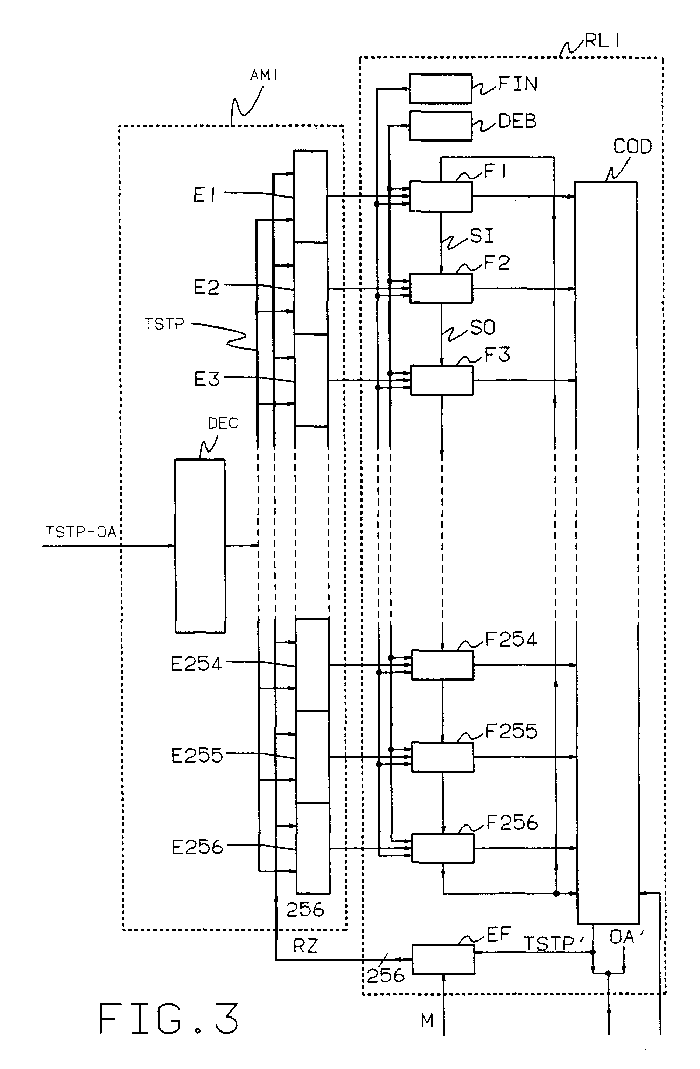

La figure 3 représente schématiquement un exemple de réalisation de la mémoire de marqueurs AM1 et du circuit logique de requête RL1, associés à la sortie OU1. Les autres mémoires de marqueurs AM2, ..., AMN et les autres circuits de requête RL1, ..., RLN sont respectivement identiques. La mémoire de marqueur AM1 comporte : un décodeur DEC, et une suite de registres E1, ..., E256, ayant une capacité d'un bit chacun, la valeur TSTPmax étant supposée égale à 256.

Le circuit logique de requête RL1 comporte :
- 256 circuits logiques F1, F2, F3...,F256 qui sont tous identiques;
- un pointeur FIN et un pointeur DEB qui sont incrémentés avec une période égale à la période de sous-cellule;
- un codeur COD ayant : 256 entrées de données, une entrée de validation recevant le signal IDL fourni par le circuit de sortie OL1 quand il est disponible, et une sortie;
- un circuit de commande, EF, ayant : une entrée reliée à la sortie du codeur COD, une entrée recevant le signal M, et 256 sorties reliées aux 256 liaisons RZ respectivement.

La sortie du circuit de requête RL1 fournit un identificateur de cellule à émettre, TSTP'-OA' dont le champ TSTP' est constitué par un mot binaire fourni par le codeur COD, et dont le champ OA' est fourni par un câblage adéquat correspondant au rang de la sortie considérée.

Le décodeur DEC comporte une entrée qui constitue l'entrée de la mémoire MA1, recevant l'identificateur TSTP-OA fourni par le circuit HP de traitement des en-têtes. Il possède 256 sorties reliées respectivement à une entrée de chacun des registres E1, ..., E256. Le décodeur DEC décode seulement la partie TSTP de cet identificateur. Il utilise pour adresser l'un des registres E1, ..., E256, et y inscrire une valeur 1 qui constitue un marqueur indiquant qu'il y a au moins une cellule en attente, qui a pour étiquette temporelle TSTP.

Les registres E1, ..., E256 ont chacun une sortie constituant une sortie de la mémoire AM1, et qui est reliée respectivement à une entrée du circuit de requête RL1. Ils possèdent chacun une entrée de remise à zéro reliée respectivement à une sortie du dispositif de commande EF, par l'une des 256 liaisons RZ.

Les pointeurs FIN et DEB sont constituées chacun d'un compteur modulo TSTPmax = 256 et d'un décodeur pour décoder le contenu du compteur. Le pointeur FIN a 256 sorties reliées respectivement à une première entrée de commande de chaque circuit logique F1, ..., F256. Le pointeur DEB a 256 sorties reliées respectivement à une deuxième entrée de commande de chaque circuit logique F1, ..., F256. Un circuit logique F1, ..., F256 est validé pour lire le contenu du registre E1, ..., E256 correspondant, seulement s'il ne reçoit pas simultanément un signal logique de valeur 1 sur sa première entrée de commande et un signal logique de valeur 1 sur sa seconde entrée de commande.

Le circuit de commande EF reçoit la valeur du champ TSTP' et la valeur du signal M pour remettre à zéro le marqueur correspondant à cette valeur de TSTP' lorsque la valeur 0 du signal M fourni par le circuit FF0 indique que toutes les cellules correspondant à ce marqueur ont été retrouvées.

Les circuits logiques F1, ..., F256 constituent un circuit de lecture et d'arbitrage. La sortie d'un seul d'entre eux fournit un signal de valeur 1, indiquant le rang du registre ayant le rang le plus élevé parmi ceux contenant un marqueur qui est considéré comme valide. En effet, il faut distinguer, à un instant donné, des marqueurs qui sont valides et des marqueurs qui ne sont pas encore valides pour être soumis au codeur à priorité COD. A cause de la capacité limitée de la mémoire AM1, les registres sont réutilisés cycliquement. Par conséquent les cellules reçues le plus récemment peuvent correspondre à des marqueurs mémorisés dans des registres ayant un rang moins élevé que celui des registres mémorisant les marqueurs correspondant à cellules reçues plus anciennement. Il est donc nécessaire d'empêcher la lecture des marqueurs dans les registres correspondant aux cellules reçues le plus récemment.

Les circuits logiques F1, ..., F256 ont la particularité de pouvoir être validés ou inhibés par les pointeurs FIN et DEB. Le contenu du pointeur FIN est toujours inférieur au contenu du pointeur DEB, modulo TSTPmax = 256, car le pointeur DEB est initialisé à la valeur 0 alors que le pointeur FIN est initialisé à la valeur Lo=128 (modulo 256). Les pointeurs DEB et FIN inhibent tous les circuits logiques F1, ..., F256 ayant un rang supérieur à la valeur pointée par le pointeur FIN, et inférieur ou égal à la valeur pointée par le pointeur DEB. Tous les circuits logiques F1, ..., F256 ayant un rang au moins égal à la valeur pointée par le pointeur DEB, ou inférieur ou égal à la valeur pointée par le pointeur FIN, modulo 256, sont validés.

Les circuits logiques F1, ..., F256 ont chacun une sortie reliée à une entrée du codeur COD et une sortie de validation reliée à une entrée de validation du circuit logique suivant, avec un rebouclage sur l'entrée de validation du circuit F1 : la sortie de validation du circuit logique F256 est reliée à l'entrée de validation du circuit F1 et à une entrée du codeur COD. La réalisation des circuits logiques F1, ..., F256 est à la portée de l'Homme de l'Art.

Une sortie du codeur COD fournit un mot binaire traduisant la valeur du rang de l'unique circuit logique F1, ..., F256 qui fournit un signal de valeur 1, c'est-à-dire le rang le plus élevé parmi les rangs des registres E1, ..., E256 appartenant au domaine validé par les pointeurs FIN et DEB, et contenant un marqueur.

Le fait de délimiter un domaine où la lecture des marqueurs est possible, et un domaine où elle n'est pas possible pendant un certain temps, permet d'éviter la lecture prématurée de certains marqueurs.

Cet exemple de réalisation ne peut cependant pas être utilisé lorsque le nombre de sous-cellules dans une cellule est supérieur à TSTPmax, car le repliement du balayage des registres E1, ..., E 256 conduit dans certains cas à un déséquencement des cellules.

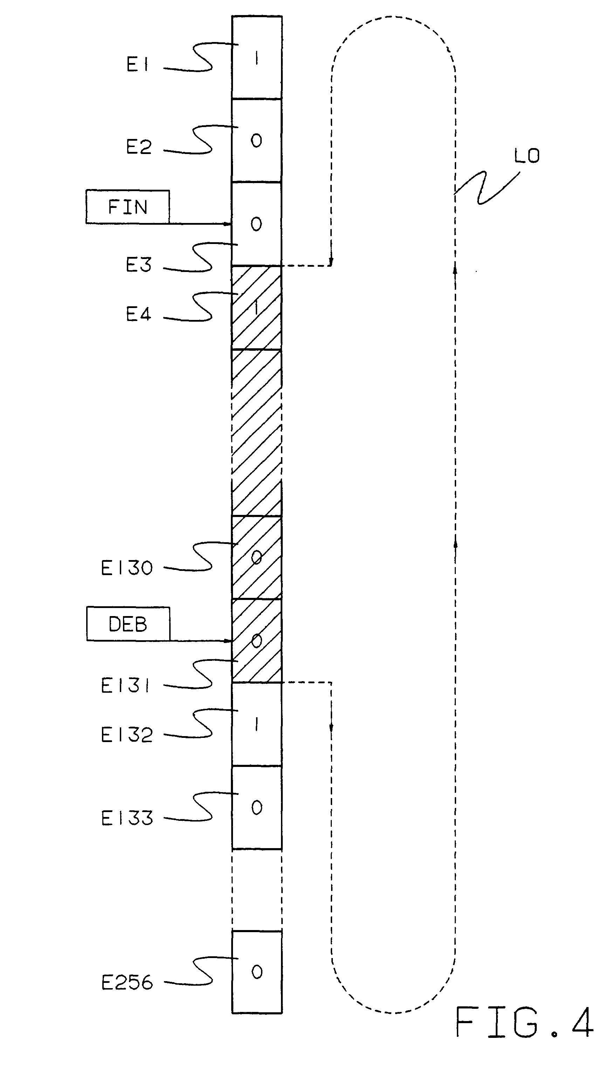

La figure 4 illustre l'opération de validation, de lecture, et d'effacement des marqueurs dans les registres E1, ...., E256, lorsque le circuit OL1 manifeste qu'il est disponible, en envoya le signal IDL au circuit de commande EF. Le pointeur DEB est incrémenté régulièrement à chaque période de sous-cellule, et il fournit une valeur qui est égale à l'étiquette temporelle TSTP de toutes les cellules dont le délai d'attente vient à expiration. Dans cet exemple de réalisation, cette valeur est identique à celle de l'étiquette temporelle TSTP courante fournie par le générateur TSG, car le délai total est choisi égal au modulo, TSTPmax, du générateur TSG. Toutes les étiquettes temporelles de valeur supérieure ou égale à la valeur du pointeur DEB correspondent à des cellules dont le délai d'attente a expiré et qui sont donc autorisées à être émises. A cause du balayage cyclique des valeurs 0 à TSTPmax, il faut aussi considérer les valeurs comprises entre O et la valeur du pointeur FIN.

Dans cet exemple, les pointeurs FIN et DEB valident les circuits logiques F132, ..., F256, F1, F2, F3. Les circuits logiques F1 à F256 ne peuvent donc lire que le contenu des registres E1, E2, E3, E132, ..., E256, non hachuré sur la figure 4. Dans ce domaine de lecture, ils peuvent détecter un marqueur dans le registre E132 et un marqueur dans le registre E1, par exemple. Ils déterminent que le marqueur de rang le plus élevé est celui contenu dans le registre 132. Le codeur COD fournit donc une étiquette temporelle TSTP' égale à 132 dans cet exemple.

Les évènements qui vont arriver au cours des périodes suivantes dépendent du contenu de la mémoire VIM1.
- S'il n'y a qu'une seule cellule en attente, ayant une étiquette temporelle TSTP égale à 132 et destinée à la sortie OU1, le signal logique M garde la valeur 0. Le circuit de commande EF en déduit qu'il peut effacer le marqueur dans le registre 132, immédiatement.
- S'il y a plusieurs cellules en attente, ayant des étiquettes temporelles TSTP égales à 132 et destinées à la sortie OU1, le signal logique M a la valeur 1. Le circuit EF sait qu'il doit alors attendre pour effacer le prochain marqueur. Le décodeur COD fournit donc la valeur TSTP' = 132, jusqu'à ce que le retour à O du signal logique M indique au circuit de commande EF que toutes les cellules à retrouver ont été retrouvées dans la mémoire VIM1. Le circuit de commande EF en déduit alors qu'il peut effacer le marqueur dans le registre E132.

On peut montrer que, pour éviter des erreurs de reséquencement, la largeur Lo du domaine où les marqueurs peuvent être lus valablement doit être inférieure ou égale à :

TSTPmax -Dmax + Dmin, où Dmax est la durée maximale de transit dans le réseau de commutation, et où Dmin est la durée minimale du transit. La différence, TSTPmax-Lo, entre les valeurs d'initialisation des pointeurs DEB et FIN doit donc être inférieure à Dmax-Dmin.

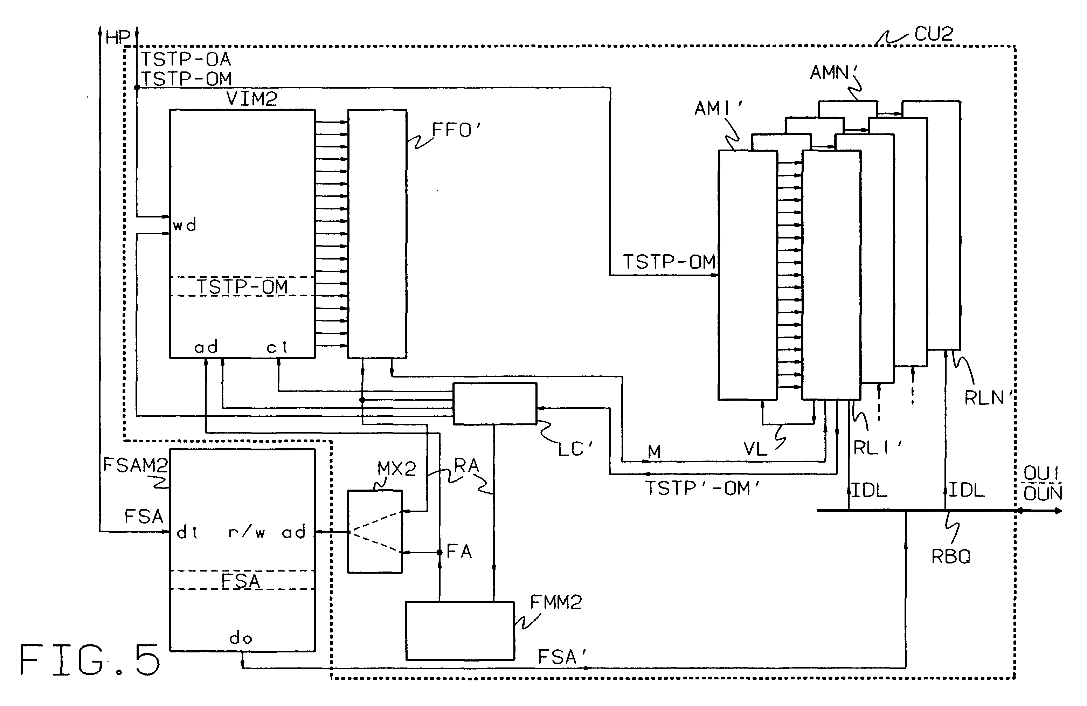

La figure 5 représente le schéma synoptique de l'unité de commande CU2 d'un second exemple de réalisation du dispositif selon l'invention permettant la diffusion d'une cellule vers plusieurs sorties du noeud. L'adresse de sortie unique OA est remplacé par un mot binaire OM comportant un nombre de bits égal au nombre N de sorties. Une mémoire de cellules en attente, VIM2, remplace VIM1 et stocke des identificateurs TSTP-OM au lieu des identificateurs TSTP-OA. Cette mémoire est accessible en lecture de deux manières : soit par le contenu, comme la mémoire VIM1, soit par une adresse appliquée sur l'entrée ad.

Des circuits logiques de requête RL1', ..., RLN' fournissent des identificateurs de cellules à émettre, TSTP' - OM', dans lequels TSTP' est encore une valeur d'étiquette temporelle désignant au moins une cellule dont le délai a expiré, et où OM' est un mot de N bits parmi lesquels un seul bit a la valeur 1. Le rang de ce bit désigne une sortie unique qui est disponible.

La mémoire VIM2 possède une entrée de comparaison ci, mais elle fonctionne un peu différemment de la mémoire VIM1 décrit précédemment en référence à la figure 2, car la comparaison doit porter sur le champ TSTP' et sur le seul bit non nul dans OM'. Les N-1 autres bits dans OM' et les N-1 autres bits correspondant dans le champ OM des identificateurs TSTP - OM mémorisés, ne doivent pas être comparés. Les bits du champ OM dans chaque mot TSTP - OM doivent être masqués par les bits du champ OM' de TSTP' - OM' avant de faire la comparaison entre l'identificateur TSTP' - OM' et chaque identificateur de cellule en attente, TSTP - OM, mémorisé dans la mémoire VIM2.

Ce deuxième exemple de réalisation comporte, en outre :
- un multiplicateur MX2 analogue à MX1;
- circuit d'arbitrage FF0' analogue à FF0;
- N mémoires de marqueurs, AM1', ..., AMN', analogues à AM1, ...,, AMN;
- N circuits d'arbitrages RL1', ..., RLN' analogues à RL1, ..., RLN;
- un circuit FMM2 de gestion d'adresses disponibles remplaçant le circuit FMM1;
- un circuit logique LC'.

La liaison directe LC du circuit CU1 est remplacée par le circuit logique LC' rajouté pour mettre à zéro un bit du champ OM dans chaque identificateur TSTP - OM qui est détecté par la comparaison, afin de mémoriser dans la mémoire VIM2 le fait qu'une sortie a été servie. Le circuit LC' possède : une entrée reliée à une sortie commune des circuits logiques de requête RL1', ... , RLN', pour recevoir l'identificateur TSTP' - OM' de cellules à retrouver; une entrée reliée à la sortie du circuit d'arbitrage FF0 fournissant l'adresse RA d'un identificateur trouvé dans la mémoire VIM2; une sortie pour retransmettre cette adresse RA au circuit de gestion FMM2, lorsque cette adresse est libérée ; une sortie reliée à l'entrée de données, wd, de la mémoire VIM2 : et une sortie reliée à l'entrée de comparaison ci de la mémoire VIM2.

Par exemple, si le dispositif de reséquencement possède 8 sorties, et si la quatrième sortie est disponible pour émettre une cellule dont le délai a expiré pendant un intervalle TSTP1, le circuit logique de requête RL1' de cette sortie fournit à la mémoire VIM2, via le circuit logique LC', l'identificateur : TSTP1-00001000.

Par exemple, supposons que la mémoire VIM2 contienne au moins un identificateur de cellule en attente égal à TSTP1 - 00001100. Cet identificateur signifie qu'il y a une cellule en attente, dont le délai d'attente a expiré et qui doit être émise sur la troisième et la quatrième sortie.

Une première recherche par comparaisons avec TSTP1 - 00001100 conduit la mémoire VIM2 et le circuit FF0' à fournir l'adresse RA de cet identificateur de cellule en attente.

La cellule correspondant à cette adresse RA est émise sur la quatrième sortie. Le circuit LC' mémorise ce fait en lisant l'identificateur TSTP1- 00001100 à l'adresse RA dans la mémoire VIM2, puis en le réinscrivant sous la forme modifiée : TSTP1-00000100, à l'adresse RA dans la mémoire VIM2. Cet identificateur modifié indique qu'il reste à servir la troisième sortie.

Plus tard, lorsque la troisième sortie manifeste qu'elle est disponible, le circuit de requête RL3' correspondant fournit à la mémoire VIM2, via le circuit logique LC', un identificateur de cellule à émettre TSTP1-00000100. Une seconde recherche par comparaison avec cet identificateur conduit la mémoire VIM2 et le circuit FF0' à fournir de nouveau l'adresse RA, qui contient l'identificateur modifié TSTP1-00000100.

La cellule correspondante est émise sur la troisième sortie. Le circuit LC' mémorise ce fait par le procédé suivant : Tout d'abord il se procure l'identificateur TSTP1-00000100 en le lisant à l'adresse RA dans la mémoire VIM2, puis il le réinscrit à l'adresse RA sous une forme modifiée : TSTP1-00000000 qui indique que toutes les sorties destinataires ont été servies et qui ne pourra plus donner de résultat positif dans une recherche ultérieure. L'emplacement peut être réutilisé. Le circuit LC' transmet alors l'adresse RA au circuit FMM2 de gestion des emplacements libres.

Le circuit d'arbitrage FF0' fournit un signal logique M jouant le même rôle que dans le circuit CU1. Si la mémoire VIM2 contient plusieurs identificateurs dont le champ TSTP a une valeur égale à celle du champ TSTP' de l'identificateur de cellule à émettre, et dont le champ OM contient une valeur 1 pour le bit correspondant au bit de valeur 1 dans le champ OM', le signal M prend la valeur 1 pour indiquer au circuit de requête demandeur qu'il y a au moins deux cellules à émettre sur la sortie correspondante, et ce circuit de requête réitère l'envoi du même identificateur de cellule à retrouver, jusqu'à ce que le signal M retourne à la valeur 0.

La portée de l'invention n'est pas limité aux exemples de réalisation décrits ci-dessus. Il est notamment à la portée de l'Homme de l'Art de modifier ces exemples de réalisation pour associer à chaque cellule sortant du réseau une étiquette dont la valeur est une estimation du retard subi par la cellule au cours de son transit à travers le réseau, au lieu de lui associer, quand elle entre dans le réseau, une étiquette indiquant l'instant de sa sortie; puis à faire subir à chaque cellule un retard supplémentaire de durée égale à la différence entre la valeur prédéterminée du retard total et la valeur estimée du retard de transit dans le réseau.

Une variante de réalisation consiste donc à attribuer une étiquette temporelle TSTP à chaque cellule sortant du réseau SN, au lieu de l'attribuer en entrée du réseau SN. Dans ce cas, le générateur TSG d'étiquettes temporelles est différent. Il comporte encore une horloge définissant des intervalles de temps de durée constante égale à une période de sous-cellule; et un compteur modulo TSTP max. Mais il comporte en outre : des moyens connus pour estimer le temps de transit de chaque cellule à travers le réseau SN; des moyens pour soustraire cette estimation au contenu du compteur; et des moyens pour additonner au résultat la durée du retard total que doit subir chaque cellule. Le résultat de ce calcul constitue la valeur de l'étiquette TSTP indiquant l'intervalle de temps où expire le délai d'attente de la cellule. Elle est utilisable exactement comme la valeur d'étiquette TSTP attribuée en entrée du réseau SN.

L'unité de temps est choisie de préférence égale à la période de sous-cellule car la durée de chaque cellule est au moins égale à une période de sous-cellule, mais il est possible d'utiliser une unité de temps plus petite.

## Revendications

1. Dispositif de reséquencement (RU) pour un noeud d'un système de commutation de cellules, chaque cellule étant constituée d'un nombre variable de sous-cellules ayant une longueur fixe, ce noeud comportant un réseau de commutation (SW) transmettant les cellules avec des premiers retards variables, toutes les sous-cellules d'une même cellule subissant un même premier retard; ce dispositif de reséquencement (RU) comportant des moyens pour stocker toutes les cellules ayant été transmises à travers le réseau de commutation, puis les émettre sur au moins une sortie du dispositif de reséquencement, après l'expiration de divers délais d'attente constituant des seconds retards tels que, pour chaque cellule, la somme du premier et du second retard est égale à une valeur prédéterminée sensiblement identique pour toutes les cellules; ces moyens comportant :
- une mémoire tampon (BM) pour stocker les sous-cellules de chaque cellule reçue par le dispositif de reséquencement;
- une mémoire d'adresses (FSAM) pour mémoriser l'adresse (FSA), de la mémoire tampon, contenant la première sous-cellule de chaque cellule;
- des moyens (TSG, IC1, ..., ICM, CU) pour retrouver l'adresse (FSA'), de la mémoire d'adresses, contenant la première sous-cellule d'une cellule, lorsque le délai d'attente de cette dernière a expiré, et qu'une sortie qui doit émettre cette cellule est disponible;
**caractérisé en ce que** les moyens pour retrouver l'adresse (FSA') de la mémoire tampon, contenant la première sous-cellule d'une cellule, comportent :
- une mémoire dite de cellules en attente (VIM), accessible par son contenu , pour mémoriser un identificateur dit de cellule en attente (TSTP-OA;TSTP-OM), lorsqu'une cellule est stockée dans la mémoire tampon (BM); cet identificateur étant stocké à une adresse (FA) identique à celle où est stockée, dans la mémoire d'adresses (FSAM), l'adresse (FSA) de la première sous-cellule; et cet identificateur étant constitué : de l'identité (TSTP) d'un intervalle de temps au cours duquel expirera le délai d'attente de cette cellule, et de l'identité (OA; OM) d'au moins une sortie sur laquelle elle doit être émise;
- des mémoires (AM1, ..., AMN) dites de marqueurs, associées respectivement aux sorties du noeud, et des moyens (DEC) pour y inscrire un marqueur lorsqu'une cellule est stockée dans la mémoire tampon (BM), chaque marqueur mémorisé identifiant un intervalle de temps au cours duquel expirera le délai d'attente d'au moins une cellule destinée à la sortie associée à la mémoire de marqueurs considérée;
- des moyens (RL1, ..., RLN, LC) associés respectivement aux mémoires de marqueurs pour lire et effacer un marqueur correspondant à l'intervalle de temps le plus ancien, parmi les marqueurs correspondant à des délais d'attente ayant expiré, lorsque la sortie correspondante est disponible; et pour fournir un identificateur de cellule à émettre (TSTP'-OA';TSTP'-OM') constitué de l'identité (TSTP') de l'intervalle de temps et de l'identité (OA'; OM') de la sortie correspondant à ce marqueur lu;
- des moyens (LC; LC') pour appliquer cet identificateur de cellule à émettre (TSTP'-OA';TSTP'-OM') à une entrée de comparaison de la mémoire de cellules en attente (VIM), cette mémoire fournissant alors les adresses (AD1, AD2, AD3) de tous les identificateurs de cellule en attente (TSTP-OA';TSTP-OM') correspondant à cet identificateur de cellule à émettre; et pour libérer les emplacements de cette mémoire (VIM) correspondant aux cellules qui ne doivent plus être émises;
- des moyens (FF0, MX) pour appliquer successivement à une entrée d'adresse de la mémoire (FSAM) de premières sous-cellules, chaque adresse (AD1, AD2, AD3) fournie par la mémoire de cellules en attente (VIM), et y lire une adresse (FSA') de première sous-cellule.

2. Dispositif selon la revendication 1, **caractérisé en ce que** les mémoires de marqueurs (AM1,...,AMN) comportent, pour chaque sortie, une suite de registres (E1,..., E256); chaque registre étant susceptible de mémoriser un seul marqueur, et le nombre de registres étant égal au nombre (TSTPmax) des identités (TSTP, TSTP') utilisables pour identifier des intervalles de temps;
**en ce que** les moyens pour inscrire un marqueur comportent des moyens (DEC) pour valider en écriture le registre correspondant à l'intervalle de temps où expirera le délai d'attente d'une cellule, en fonction de l'identificateur (TSTP-OA) de cette cellule;
et **en ce que** les moyens (RL1, ..., RLN) pour lire et effacer un marqueur comportent pour chaque sortie :
- des moyens (F1, ..., F256, DEB, FIN, EF) pour lire les marqueurs correspondant aux intervalles de temps les plus anciens;
- des moyens (COD) reliés à tous les registres, pour fournir un identificateur de cellule à émettre (TSTP'-OA'; TSTP'-OM') constitué : de l'identité (TSTP') de l'intervalle de temps le plus ancien parmi ceux correspondant aux marqueurs lus; et de l'identité (OA'; OM') de ladite sortie;
- des moyens (EF) pour effacer le marqueur correspondant à l'intervalle de temps le plus ancien, parmi les marqueurs lus, lorsque toutes les cellules correspondant à cet identificateur de cellules à émettre ont été retrouvées dans la mémoire de cellules en attente (VIM).

3. Dispositif selon la revendication 1, permettant la diffusion d'une cellule d'une entrée vers plusieurs sorties du dispositif de reséquencement, **caractérisé en ce que** :
- pour chaque cellule devant être émise par plusieurs sorties, un identificateur de cellule en attente (TSTP-OM) identifie chacune des sorties (OM) sur lesuelles elle doit être émise;
- chaque identificateur (TSTP'-OM') de cellule à émettre identifie une seule sortie disponible (OM');
et **en ce qu'**il comporte en outre des moyens (LC') pour :
- retrouver dans la mémoire (VIM2) de cellules en attente, successivement chaque identificateur de cellule en attente, contenant l'identité de la sortie disponible identifiée par l'identificateur de cellule à émettre (TSTP'-OM');
- lire dans cette mémoire (VIM2) chaque identificateur, de cellule en attente, ainsi retrouvé;
- émettre la cellule correspondante sur ladite sortie;
- réinscrire cet identificateur à la même adresse dans la mémoire (VIM2) de cellules en attente, après avoir supprimé dans cet identificateur l'identité de la sortie où la cellule a été émise, pour mettre à jour cet identificateur de cellule en attente (TSTP-OM).

## Claims

1. Resequencing device (RU) for a node of a cell switching system, each cell comprising a variable number of sub-cells of fixed length, said node comprising a switching network (SW) transmitting said cells with first variable delays, all the sub-cells of a same cell being subjected to a same first delay; said resequencing device (RU) including means for storing all the cells that have been transmitted through said switching network and for then sending them to at least one output of said resequencing device after various waiting delays constituting second delays having expired so that for each cell the sum of said first and said second delay is equal to a predetermined value substantially equal for all said cells; said means including:
- a buffer memory (BM) for storing the sub-cells of each cell received by said resequencing device;
- an address memory (FSAM) for storing the address (FSA) of said buffer memory containing the first sub-cell of each cell;
- means (TSG, IC1, ... , ICM, CU1) for finding in said address memory the address (FSA') containing the first sub-cell of a cell when the waiting delay of the latter has expired and when an output which has to send said cell is available;
**characterized in that** said means for finding the address (FSA') of said buffer memory containing the first sub-cell of a cell includes:
- a so-called waiting-cell memory (VIM1), addressable by its content, for storing a so-called waiting-cell identifier (TSTP-OA; TSTP-OM) when a cell is stored in said buffer memory (BM); said identifier being stored at an address (FA) identical to the address where the address (FSA) of said first sub-cell is stored in said address memory (FSAM); and said identifier including: the identity (TSTP) of a time slot during which the waiting delay of said cell will expire and the identity (OA; OM) of at least one output to which said cell has to be sent;
- so-called marker memories (AM1, ... , AMN) respectively associated with said outputs of said node and means (DEC) for writing therein a marker when a cell is stored in said buffer memory (BM), each stored marker identifying a time slot during which the waiting delay of at least one cell intended to the output associated with said marker memory will expire;
- means (RL1, ... , RLN, LC), respectively associated with said marker memories, for reading and deleting a marker corresponding to the oldest time slot among the markers corresponding to waiting delays having expired when the corresponding output is available; and to provide a cell-to-send identifier (TSTP'-OA'; TSTP'-OM') constituted by the identity (TSTP') of the time slot and by the identity (OA'; OM') of the output corresponding to said read marker;
- means (LC; LC') for applying said cell-to-send identifier (TSTP'-OA'; TSTP'-OM') to a comparison input of said waiting-cell memory (VIM), said memory then providing the addresses (AD1, AD2, AD3) of all the waiting-cell identifiers (TSTP-OA'; TSTP-OM') corresponding to said cell-to-send identifier; and for freeing the locations of said memory (VIM) corresponding to the cells which have no longer to be sent;
- means (FF0, MX) for successively applying to an address input of said memory (FSAM) of first sub-cells, each address (AD1, AD2, AD3) provided by said waiting-cell memory (VIM) and for reading therein an address (FSA') of a first sub-cell.

2. Device according to claim 1 **characterized in that** said marker memories (AM1, ..., AMN) include, for each output, a chain of registers (E1, ..., E256); each register being able to store a single marker and the number of registers being equal to the number (TSTPmax) of identities (TSTP, TSTP') usable to identify time slots;
**in that** the means for writing a marker include a means (DEC) for write-enabling the register corresponding to the time slot during which the waiting delay of a cell will expire in function of the identifier (TSTP-OA) of said cell;
**in that** said means (RL1, ... , RLN) for reading and deleting a marker comprise, for each output:
- means (F1, ..., F256, DEB, FIN, EF) for reading the markers corresponding to the oldest time slots;
- means (COD) connected to all said registers for providing a cell-to-send identifier (TSTP'-OA'; TSTP'-OM') comprising: the identity (TSTP') of the oldest time slot among those corresponding to the read markers and the identity (OA'; OM') of said output;
- means (EF) for deleting the marker corresponding to the oldest time slot among the read markers when all the cells corresponding to said cell-to-send identifier have been found in said waiting-cell memory (VIM).

3. Device according to claim 1 allowing the distribution of one cell from one input to several outputs of said resequencing device, **characterized in that**:
- for each cell to be sent by several outputs, a waiting-cell identifier (TSTP-OM) identifies each of said outputs (OM) on which it has to be sent;
- each cell-to-send identifier (TSTP'-OM') identifies a single available output (OM');
and **in that** it also includes means (LC') for:
- successively finding each waiting-cell identifier in said waiting-cell memory (VIM2) containing the identity of said available output identified by said cell-to-send identifier (TSTP'-OM');
- reading each waiting-cell identifier thus found in said memory (VIM2);
- sending the corresponding cell to said output;
- rewriting said identifier to the same address in said waiting-cell memory (VIM2) after having deleted in said identifier the identity of the output where said cell-to-send was sent, in order to update said waiting-cell identifier (TSTP-OM).

## Patentansprüche

1. Vorrichtung (RU) zur Neusequenzierung für einen Knoten eines Vermittlungssystems für Zellen, wobei jede Zelle aus einer variablen Anzahl von Unterzellen mit einer festen Länge besteht, wobei dieser Knoten ein Vermittlungsnetz (SW) aufweist, das die Zellen mit ersten variablen Verzögerungen überträgt, wobei alle Unterzellen einer selben Zelle die gleiche erste Verzögerung erfahren; wobei diese Vorrichtung (RU) zur Neusequenzierung Mittel zum Speichern aller Zellen, die über das Vermittlungsnetz übertragen wurden, dann zum Senden derer auf wenigstens einen Ausgang der Vorrichtung zur Neusenquenzierung nach Ablauf von verschiedenen Wartezeiten aufweist, die zweite Verzögerungen bilden, so dass für jede Zelle die Summe der ersten und der zweiten Verzögerung gleich einem vorher bestimmten Wert ist, der für alle Zellen im Wesentlichen identisch ist; wobei diese Mittel aufweisen:
- einen Pufferspeicher (BM) zum Speichern der Unterzelle jeder von der Vorrichtung zur Neusequenzierung empfangenen Zelle;
- einen Adressenspeicher (FSAM) zum Speichern der Adresse (FSA) des Pufferspeichers, die die erste Unterzelle jeder Zelle enthält;
- Mittel (TSG, IC1, ..., ICM, CU) zum Wiedergewinnen der Adresse (FSA') des Adressenspeichers, die die erste Unterzelle einer Zelle enthält, wenn die Wartezeit dieser letzteren abgelaufen ist ein Ausgang, der diese Zelle senden soll, verfügbar ist;
**dadurch gekennzeichnet dass** die Mittel zum Wiedergewinnen der Adresse (FSA') des Pufferspeichers, die die erste Unterzelle einer Zelle enthält, umfassen:
- einen Speicher (VIM), Speicher für wartende Zellen genannt, der über seinen Inhalt zugänglich ist, um einen Bezeichner, Bezeichner für eine wartende Zelle (TSTP-OA; TSTP-OM) genannt, zu speichern, wenn eine Zelle im Pufferspeicher gespeichert ist; wobei dieser Bezeichner an einer Adresse (FA) gespeichert wird, die mit derjenigen identisch ist, an der im Adressenspeicher (FSAM) die Adresse (FSA) der ersten Unterzelle gespeichert ist, und wobei dieser Bezeichner besteht aus: der Identität (TSTP) eines Zeitintervalls, während dessen die Wartezeit für diese Zelle abläuft, und der Identität (OA; OM) wenigstens eines Ausgangs, auf dem sie gesendet werden soll;
- Speicher (AM1, ..., AMN), Markiererspeicher genannt, die entsprechend zu den Ausgängen des Knotens gehörien, und Mitteln (DEC), um dort einen Markierer einzutragen, wenn eine Zelle im Pufferspeicher (BM) gespeichert ist, wobei jeder gespeicherte Markierer ein Zeitintervall identifiziert, während dessen die Wartezeit wenigstens einer Zelle abläuft, die für den zum betrachteten Markiererspeicher gehörigen Ausgang bestimmt ist,
- Mittel (RL1, ..., RLN, LC), die entsprechend gehören zu: Markiererspeichern, um einen Markierer, der unter den Markierern, die den Wartezeiten entsprechen, die abgelaufen sind, zum ältesten Zeitintervall gehört, zu lesen und zu löschen, wenn der entsprechende Ausgang verfügbar ist; und um einen Bezeichner TSTP'-OA';TSTP'-OM') für die zu sendende Zelle zu liefern, der aus der Identität (TSTP') des Zeitintervalls und der Identität (OA'; OM') des diesem gelesenen Markierer enstprechenden Ausgangs besteht;
- Mittel (LC; LC'), um diesen Bezeichrier (TSTP'-OA';TSTP'-OM') für die zu sendende Zelle an einen Vergleichseingang des Speichers für eine wartende Zelle (VIM) zu geben, wobei dieser Speicher dann die Adressen (AD1, AD2, AD3) aller Bezeichner (TSTP'-OA';TSTP'-OM') für eine wartende Zelle liefert, die diesem Bezeichnet für eine zu sendende Zelle entsprechend; und um die Stellen dieses Speichers (VIM) freizumachen, die den Zellen entsprechen, die nicht mehr gesendet werden sollen;
- Mittel (FF0, MX), um nacheinander jede vom Speicher (VIM) für wartende Zellen gelieferte Adresse (AD1, AD2, AD3) an einen Adresseneingang des Speichers (FSAM) für erste Unterzellen zu geben und dort eine Adresse (FSA') für eine erste Unterzelle zu lesen.

2. Vorrichtung nach Anspruch 1, **dadurch gekennzeichnet, dass** die Markiererspeicher (AM1, ..., AMN) für jeden Ausgang eine Folge von Registern (E1, ..., E256) umfassen; wobei jedes Register fähig ist, einen einzigen Markierer zu speichern, und die Anzahl von Registern gleich der Anzahl (TSTPmax) der Identitäten (TSTP, TSTP') ist, die zum Identifizieren der Zeitintervalle verwendbar sind;
dass die Mittel zum Eintragen eines Markierers Mittel (DEC) aufweisen, um beim Schreiben das Register, das dem Zeitintervall entspricht, in dem die Wartezeit einer Zelle abläuft, in Abhängigkeit vom Bezeichner (TSTP-OA) dieser Zelle freizugeben;
und dass die Mittel (RL1, ..., RLN) zum Lesen und Löschen eines Markierers für jeden Ausgang umfassen:
- Mittel (F1, ..., F256, DEB, FIN, EF) zum Lesen der Markierer, die den ältesten Zeitintervallen entsprechen;
- Mittel (COD), die mit allen Registern verbunden sind, um einen Bezeichner (TSTP'-OA'; TSTP'-OM') für die zu sendende Zelle zu liefern, der besteht aus: der Identität (TSTP') des ältesten Zeitintervalls unter denjenigen, die den gelesenen Markierern entsprechen; und der Identität (OA'; OM') des Ausgangs;
- Mittel (EF) zum Löschen des Markierers, der dem ältetesten Zeitintervall entspricht, unter den gelesenen Markierern, wenn alle Zellen, die diesem Bezeichner für zu sendende Zellen entsprechen, im Speicher (VIM) für wartende Zellen wiedergewonnen wurden.

3. Vorrichtung nach Anspruch 1, die die Ausbreitung einer Zelle von einem Eingang zu mehreren Ausgängen der Vorrichtung zur Neusequenzierung gestattet, **dadurch gekennzeichnet, dass**:
- für jede Zelle, die über mehrere Ausgänge gesendet werden soll, ein Bezeichner (TSTP-OM) für eine wartende Zelle jeden der Ausgänge (OM) identifiziert, auf welchen sie gesendet werden soll;
- jeder Bezeichner (TSTP'-OM') für eine zu sendende Zelle einen einzigen verfügbaren Ausgang (OM') identifiziert;
und dass sie außerdem Mittel (LC') umfasst, um:
- im Speicher (VIM2) für wartende Zellen nacheinander jeden Bezeichner für eine wartende Zelle wiederzugewinnen, der die Identitiät des verfügbaren Ausgangs enthält, der durch den Bezeichner (TSTP'-OM') für eine zu sendende Zelle identifiziert ist;
- in diesem Speicher (VIM2) jeden so wiedergewonnenen Bezeichner für eine wartende Zelle zu lesen;
- die entsprechende Zelle auf dem Ausgang zu senden;
- diesen Bezeichner an derselben Adresse im Speicher (VIM) für wartende Zellen wieder einzutragen, nachdem in diesem Bezeichner die Identität des Ausgangs entfernt wurde, auf dem die Zelle gesendet wurde, um diesen Bezeichner (TSTP-OM) für eine wartende Zelle zu aktualisieren.
